# EUROPEAN PATENT SPECIFICATION

(11) **EP 2 599 678 B1**
(45) Date of publication and mention of the grant of the patent: **15.06.2016**
(21) Application number: 11812018.7
(22) Date of filing: 22.07.2011
(51) Int. Cl.: B60T 15/18, B60T 8/22, B60T 15/36, B60T 8/18

(54) **VARIABLE-LOAD VALVE AND BRAKE CONTROL DEVICE**
VENTIL MIT VARIABLER LAST UND BREMSSTEUERVORRICHTUNG
SOUPAPE DE CHARGE VARIABLE ET DISPOSITIF DE COMMANDE DE FREIN

(30) Priority: 30.07.2010 JP 2010172018
(43) Date of publication of application: 05.06.2013
(73) Proprietor: Nabtesco Corporation, Tokyo 102-0093 (JP)
(72) Inventor: YAMANAKA, Masatami, Kobe-shi Hyogo 651-2271 (JP)
(74) Representative: Müller-Boré & Partner Patentanwälte PartG mbB
(86) International application number: PCT/JP2011/004132
(87) International publication number: WO 2012/014416

(56) References cited:
- JP-A- 2005 067 312
- JP-U- H0 443 562
- US-A- 5 146 952
- US-A- 5 340 203

## Description

### TECHNICAL FIELD

The present invention relates to a variable load valve and a brake control device.

### BACKGROUND ART

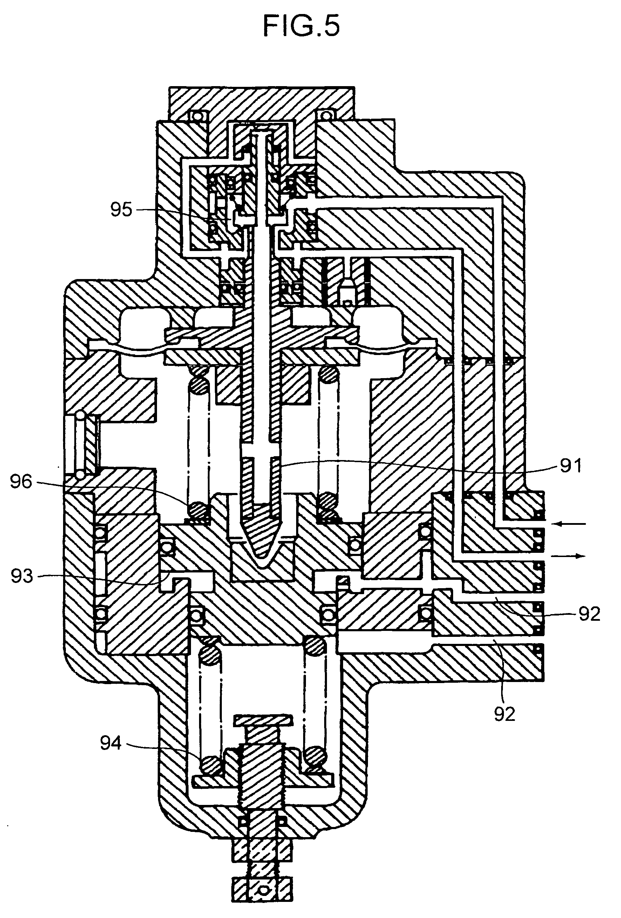

Heretofore, there has been known a variable load valve designed to output a pressure according to a weight of a railway vehicle, as disclosed in the following Patent Document 1. As illustrated in FIG. 5, the variable load valve disclosed in the Patent Document 1 comprises: a piston 91 displaceably provided inside a block; an introducing passage 92 for introducing therethrough an air pressure from a non-illustrated air spring which receives a load of a vehicle; a force transmitting member 93 for transmitting, to a piston 91, the air pressure introduced through the introducing passage 92; an adjustment spring 94 for ensuring a minimum proof pressure; and a spring 96 elastically supporting the piston 91. This variable load valve is configured such that the piston 91 is displaced upwardly (in FIG. 5) by the air pressure applied to the force transmitting member 93 and an elastic force of the adjustment spring 94, to open a supply and release valve 95, thereby outputting a load compensated pressure. In this variable load valve, the piston 91, the adjustment spring 94, the force transmitting member 93 and the spring 96 are designed to allow a characteristic of the load compensated pressure with respect to the air pressure introduced from the air spring, to become a predetermined performance curve.

Even if the piston 91, the adjustment spring 94, the force transmitting member 93 and the spring 96 are designed to allow the variable load valve to exhibit a predetermined load compensated pressure characteristic, as disclosed in the Patent Document 1, there is a possibility that a performance specification is changed in the design process, or that a weight of an actually finished vehicle does not conform to a planned weight. In this case, design for the piston 91, the adjustment spring 94, the force transmitting member 93 and the spring 96 has to be redone, which is likely to cause a problem in relation to delivery date. In order to cope with such a problem, the invention disclosed in the Patent Document 1 employs an electronic control system. However, a user is likely to feel some resistance to using electronic control in a variable load valve for governing control of an emergency brake. In this case, the invention disclosed in the Patent Document 1 cannot be employed.

Document 2 discloses a variable load value according to the preamble of claim 1

### LIST OF PRIOR ART DOCUMENTS

### [PATENT DOCUMENTS]

Patent Document 1: JP-U 4-043562A
Patent Document 2: US-A- 5,146,952

### SUMMARY OF THE INVENTION

The present invention is directed to solving the above problems in the conventional technique. Specifically, it is an object of the present invention to contrive a mechanical structure, thereby making it possible to easily cope with redesign due to a change in performance specification or the like.

According to a first aspect of the present invention, there is provided a variable load valve which comprises: a valve body having a space defined therein; an annular-shaped first diaphragm member disposed within the space in a state in which an outer peripheral portion thereof is fixed, to define, in the space, a pilot chamber for receiving an air pressure according to a vehicle weight, wherein the first diaphragm member is bendable by a pressure inside the pilot chamber; an annular-shaped second diaphragm member disposed within the space in a state in which an outer peripheral portion thereof is fixed, to define, in the space, an output chamber for outputting a load compensated pressure, wherein the second diaphragm member is bendable by a pressure inside the output chamber; a piston adapted to be axially displaced in accordance with a bending of the first diaphragm member and a bending of the second diaphragm member, thereby generating a load compensated pressure; a force transmitting member having a fixed portion fixed to an outer peripheral surface of the piston, a pressure receiving portion having a pressure receiving surface extended radially from the fixed portion for receiving a pressing force caused by the bending of the second diaphragm member, and an extension portion extended radially from the fixed portion at a position opposite to the pressure receiving portion across the second diaphragm member, wherein the force transmitting member is adapted to transmit, to the piston, a force according to the pressing force received from the second diaphragm member through the pressure receiving surface; and a diaphragm fixing member formed separately from the valve body, and adapted to fix the outer peripheral portion of the second diaphragm member to the valve body and set an area of the pressure receiving surface of the force transmitting member.

### BRIEF DESCRIPTION OF THE DRAWINGS

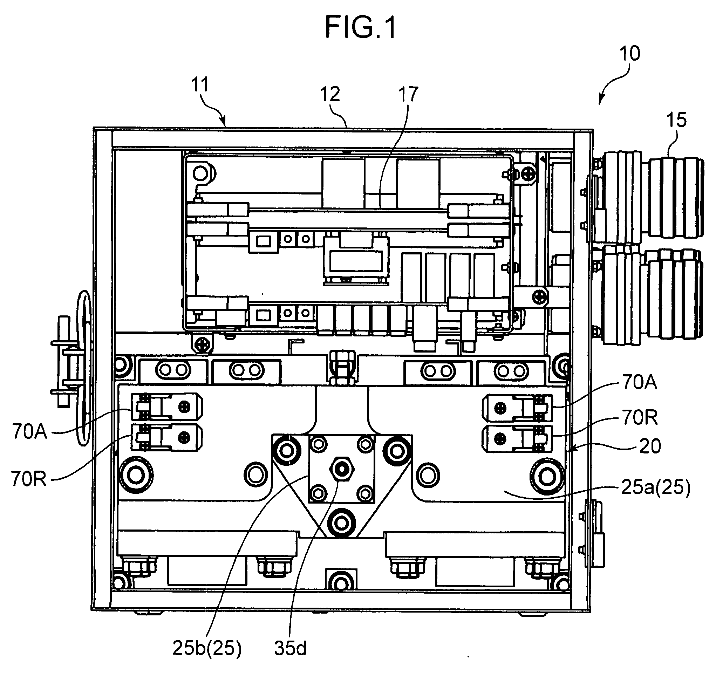

FIG. 1 is a front view illustrating an external appearance of a brake control device according to one embodiment of the present invention.
FIG. 2 is a diagram of a compressed-air circuit provided in the brake control device.
FIG. 3 is a vertical sectional view of a central region of a block provided in the brake control device.
FIG. 4 is a graph illustrating a load compensated pressure characteristic of a variable load valve provided in the brake control device.
FIG 5 is a sectional view illustrating a configuration of a conventional variable load valve.

### DESCRIPTION OF EMBODIMENTS

With reference to the drawings, the present invention will now be described in detail based on an embodiment thereof.

A brake control device 10 according to this embodiment comprises a casing 11 formed in a rectangular box-like shape. An internal space of the casing 11 is defined as a receiving space capable of housing an aftermentioned brake pressure control valve 20 and others. The casing 11 has a casing body 12 with an opening at a front end thereof, and a non-illustrated lid member capable of opening and closing the opening of the casing body 12.

As used in this specification, the term "front (or fore) side" means a side toward which the opening of the casing body 12 is oriented, i.e., a side which faces an operator during maintenance, and the term "rear (or back) side" means the other side of the "front (or fore) side". Therefore, the front and rear sides have no relation to a front-rear direction of a vehicle. The terms "right" and "left" mean right and left when viewed from the front (fore) side.

The casing body 12 has a back surface to which a non-illustrated pipe seat is fixed. The pipe seat is a member internally formed with an air passage and others. For example, the air passage is designed to connect a pipe line of a source pressure to be introduced from outside the casing 11, etc., with a variable load valve 21, a relay valve 22 and others comprised in the aftermentioned brake pressure control valve 20.

The casing 11 (casing body 12) has a sidewall provided with a cannon connector 15. The cannon connector 15 is a connector having a large number of connection terminals connectable with various electric lines including a signal line and a power line. In the illustrated embodiment, a cannon connector configured as a receptacle connectable with an electric line with a plug is illustrated as an example. The cannon connector 15 is electrically connected to a control board 17.

A brake pressure control valve 20 is provided in the receiving space inside the casing 11 (casing body 12) at a position below the control board 17.

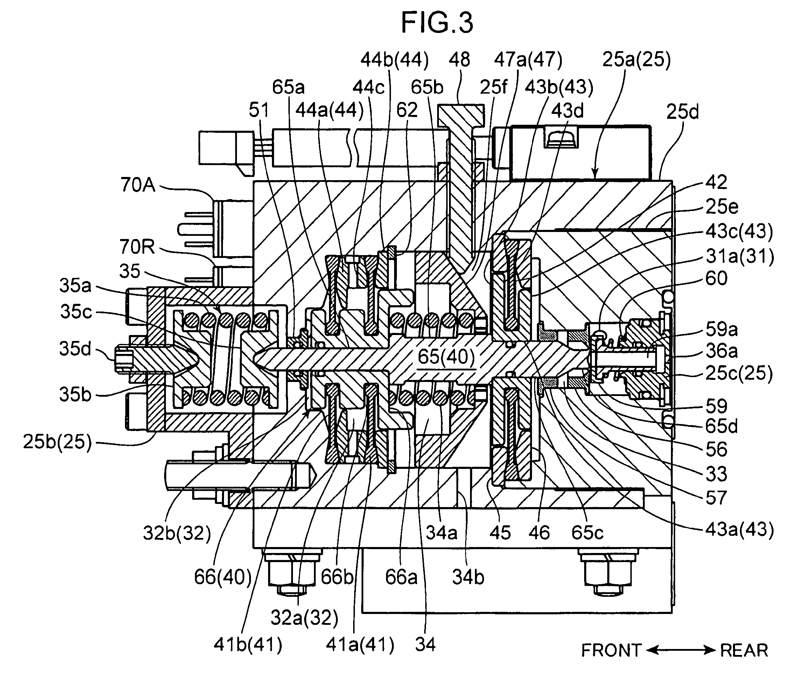

The brake pressure control valve 20 is designed to adjust a brake pressure to be supplied to a non-illustrated brake cylinder, wherein it has a block 25 which is a valve body internally formed with a space (internal space) 25f (see FIG. 3). The block 25 is formed in an approximately rectangular shape, and integrally provided with a variable load valve 21 and a relay valve 22. Details of respective configurations of the variable load valve 21 and the relay valve 22 will be described later.

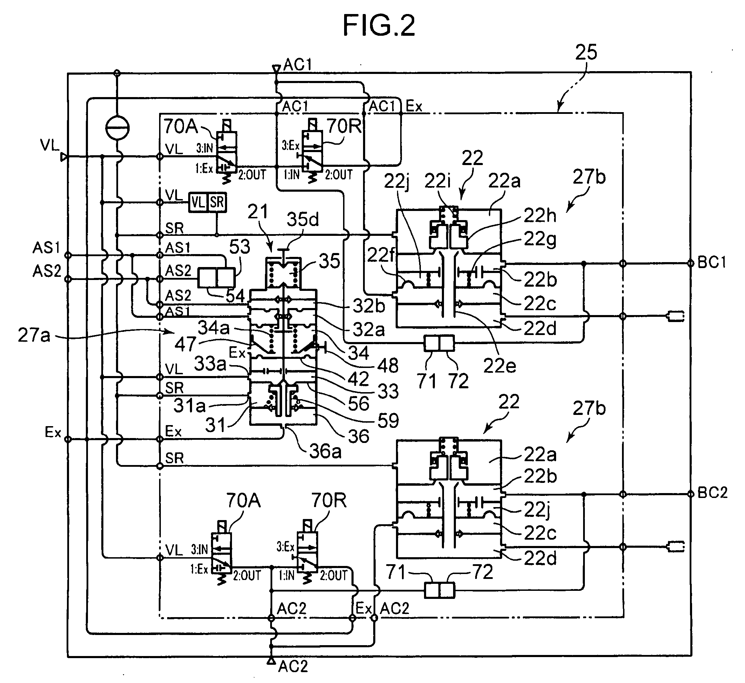

The brake control device 10 according to this embodiment is provided with a compressed air circuit 27 as illustrated in FIG. 2. The compressed air circuit 27 is formed to extend between the block 25 of the brake pressure control valve 20 and the pipe seat. The block 25 is provided with the variable load valve 21 (see FIG. 3) and a pair of the relay valves 22, which constitute the compressed air circuit 27.

The compressed air circuit 27 is an air circuit designed to adjust an air pressure (source pressure SR) obtained from an air source (illustration is omitted) which is a supply source of compressed air, and then apply the air pressure to the non-illustrated brake cylinder. The compressed air circuit 27 comprises a load-compensated-pressure generating section 27a for generating a load compensated pressure VL, and a brake-pressure generating section 27b for generating a brake pressure BC based on the load compensated pressure VL.

The load-compensated-pressure generating section 27a is a region of the compressed air circuit 27 having the variable load valve 21.

FIG. 3 is a sectional view illustrating an inside of the block 25 when viewing the block 25 from a lateral side thereof. As illustrated in FIG. 3, the block 25 comprises a block body 25a formed with a through-hole extending in a front-rear direction, a first cover portion 25b provided to cover a front opening of the through-hole, and a second cover portion 25c provided to cover a rear opening of the internal space 25f. The internal space 25f is formed in a widthwise and heightwise approximately central region of the block 25 to extend from a front surface to a rear surface of the block body 25a.

The block body 25a comprises a first block portion 25d and a second block portion 25e which are fastened to each other. The first block portion 25d is a member having an integral structure defining a front surface, an upper surface and a lower surface of the block 25. The first block portion 25d is formed with a hole penetrating therethrough in the front-rear direction. The hole has a stepped portion formed to be able to receive a fastening force of the second block portion 25e. The second block portion 25e is inserted into the hole of the first block portion 25d from the side of the rear surface, and, in this state, fastened to the first block portion 25d. The second block portion 25e is also formed with a hole penetrating therethrough in the front-rear direction, and communicated with the hole of the first block portion 25d, so that the aforementioned through-hole is formed in the block body 25a.

The variable load valve 21 is provided in the internal space 25f of the block 25. The variable load valve 21 is adapted to adjust a source pressure SR to a load compensated pressure VL by using, as a pilot pressure, an air pressure (AS1, AS2) introduced from a non-illustrated air spring applied with a vehicle load, and output the load compensated pressure VL. In this embodiment, two air springs (illustration is omitted) are connected to the brake pressure control valve 20, wherein an air having a pressure AS 1 is introduced from a first one of the air springs, and an air having a pressure AS2 is introduced from the other, second, air spring. The load compensated pressure VL is an air pressure suited to apply, to the non-illustrated brake cylinder, a brake pressure according to a current load of a vehicle which carries passengers

The variable load valve 21 comprises: an input chamber 31 having an input port 31 a for receiving an input of the source pressure SR; a pilot chamber 32 having a pilot port for receiving an input of the air pressures AS1, AS2 as pilot pressures; an output chamber 33 having an output port 33a (see FIG. 2) for outputting the load compensated pressure VL; an adjustment chamber 34 provided with an adjustment spring 34a; a spring chamber 35 provided with an empty-condition proof spring 35a; and an air release chamber 36 (see FIG. 2) having an air release port 36a.

The variable load valve 21 further comprises: a piston 40; a first diaphragm member 41; a second diaphragm member 42; a force transmitting member 43; a first-diaphragm-member fixing portion 44; a diaphragm fixing member 45; an auxiliary fixing member 46; the adjustment spring 34a; a spring bearing 47; and an adjusting member 48.

A front surface-side end of the through-hole of the block body 25a is slightly increased in diameter, and opened in the front surface of the block body 25a. The first cover portion 25b having a bottomed cylindrical shape is placed to cover the front surface-side end of the through-hole to thereby define the spring chamber 35. That is, the spring chamber 35 is defined at a front surface-side end inside the block 25.

The spring chamber 35 is provided with the empty-condition proof spring 35a, a first holding member 35b in contact with one end (front end) of the empty-condition proof spring 35a, a second holding member 35c in contact with the other end (rear end) of the empty-condition proof spring 35a, and an empty-condition proof pressure adjusting member 35d screwed with a screw hole penetrating through the first cover portion 25b to press the first holding member 35b from a front side thereof. The empty-condition proof pressure adjusting member 35d is an adjusting tool for adjusting a compression amount of the empty-condition proof spring 35a. A reaction force of the empty-condition proof spring 35a to the empty-condition proof pressure adjusting member 35d is received by the first cover portion 25b of the block 25.

The empty-condition proof spring 35a is a member for generating a pressure corresponding to an empty-condition load compensated pressure. The term "empty-condition load compensated pressure" means a pressure corresponding to a pressure to be applied to the brake cylinder when activating an emergency brake under a condition that a vehicle is empty. The empty-condition proof spring 35a is provided in the above manner. Thus, even if the pilot pressure is vanished due to failure or the like, at least the pressure corresponding to the empty-condition load compensated pressure can be ensured by the empty-condition proof spring 35a.

The pilot chamber 32 is separated from the spring chamber 35 by a first bush 51 fixed to the block body 25a (block 25) in the through-hole. That is, the pilot chamber 32 is located next to the spring chamber 35. The first bush 51 is provided in a reduced-diameter region of the through-hole on one end of the spring chamber 35 in the front-rear direction (a moving direction of the piston 40).

The pilot chamber 32 has a first pilot portion 32a for receiving the air pressure AS1 introduced from the first air spring, and a second pilot portion 32b for receiving the air pressure AS2 introduced from the second air spring. The first pilot portion 32a is a chamber partitioned in the through-hole by an aftermentioned primary diaphragm 41 a and an aftermentioned secondary diaphragm 41b. The second pilot portion 32b is a chamber partitioned in the through-hole by the aftermentioned secondary diaphragm 41b and the first bush 51. That is, the second pilot portion 32b is located next to the spring chamber 35, and the first pilot portion 32a is located next to the second pilot portion 32b.

The first pilot portion 32a is provided with a first pilot port, and adapted to receive the air pressure AS 1 through the first pilot port. A passage connecting to the first pilot port is provided with a pressure sensor 53 (see FIG. 2). On the other hand, the second pilot portion 32b is provided with a second pilot port, and adapted to receive the air pressure AS2 through the second pilot port. A passage connecting to the second pilot port is provided with a pressure sensor 54 (see FIG 2).

The adjustment chamber 34 is a chamber partitioned in the through-hole by the aftermentioned primary diaphragm 41a and the second diaphragm member 42. That is, the adjustment chamber 34 is located next to the first pilot portion 32a (pilot chamber 32). The adjustment chamber 34 is provided with a communication hole 34b for allowing an inside of the adjustment chamber 34 to be communicated with an outside of the block 25. Thus, the inside of the adjustment chamber 34 is kept at atmospheric pressure.

The output chamber 33 is located next to the adjustment chamber 34. The output chamber 33 is a chamber partitioned in the through-hole by the second diaphragm member 42 and a supply and release bush 56. The supply and release bush 56 is provided in the through-hole to partition between the output chamber 33 and the input chamber 31.

In the output chamber 33, a second bush 57 is fixedly provided in a reduced-diameter region of the through-hole. The second bush 57 is formed with a though-hole, so that right and left sides of the second bush 57 are communicated with each other.

The input chamber 31 is located next to the output chamber 33. The input chamber 31 is separated from the output chamber 33 in the through-hole by the supply and release bush 56 and a supply valve element 59. The supply valve element 59 has an air release passage 59a formed along an axis thereof. The air release passage 59a is communicated with an air release port 36a formed in the second cover portion 25c.

The supply valve element 59 is adapted to be displaceable in the moving direction of the piston 40 according to a spring 60. More specifically, the supply valve element 59 is pressed against the supply and release bush 56 and the piston 40 (aftermentioned valve stem 65) by a spring 60 provided between the second cover portion 25c and the supply valve element 59. When the supply valve element 59 is moved in a direction away from the supply and release bush 56 and the piston 40 by an air pressure inside the input chamber 31, the input chamber 31 and the air release passage 59a are communicated with each other. On the other hand, when the supply valve element 59 is pushed in a right direction in FIG. 3 by the piston 40, the source pressure SR is supplied to the output chamber 33.

The first diaphragm member 41 comprises a primary diaphragm 41 a disposed on the side of the adjustment chamber 34, and a secondary diaphragm 41b disposed on the side of the spring chamber 35. Each of the primary diaphragm 41a and the secondary diaphragm 41b is composed of a member having the same structure, and formed in an annular shape. The primary diaphragm 41 a and the secondary diaphragm 41b are arranged in side-by-side spaced-apart relation to each other in the moving direction of the piston 40, and each of them is disposed such that an outer peripheral surface thereof is in contact with an inner peripheral surface of the through-hole of the block body 25a.

The first diaphragm member 41 is fixed to the block body 25a by the first-diaphragm-member fixing portion 44. The first-diaphragm-member fixing portion 44 has a main fixing portion 44a and an auxiliary fixing portion 44b. The main fixing portion 44a is provided between the primary diaphragm 41a and the secondary diaphragm 41b. An outer periphery of the secondary diaphragm 41 b is clamped between the main fixing portion 44a and a wall portion of the block body 25a defining the second pilot portion 32b, so that the outer periphery of the secondary diaphragm 41 b is fixed to the block body 25a. The main fixing portion 44a is provided with a communication hole 44c communicated with the first pilot port of the pilot chamber 32. On the other hand, a portion of the block body 25a facing the second pilot portion 32b is provided with the second pilot port of the pilot chamber 32.

The auxiliary fixing portion 44b is provided in the adjustment chamber 34. An outer periphery of the primary diaphragm 41 a is clamped between the main fixing portion 44a and the auxiliary fixing portion 44b, so that the outer periphery is positionally fixed. The auxiliary fixing portion 44b is fixed by a retaining ring fixed to the block body 25a.

The piston 40 comprises a valve stem 65, and a pilot pressure transmitting member 66 displaceably attached to the valve stem 65. The valve stem 65 is a member having an elongate shape in one direction (front-rear direction), and provided to extend over the spring chamber 35, the pilot chamber 32, the adjustment chamber 34 and the output chamber 33. The valve stem 65 has a base end-side portion 65a extending from an end on the side of the spring chamber 35 (base end) successively with the same diameter, a large diameter portion 65b continuously extending from the base end-side portion 65a and having a diameter greater than that of the base end-side portion 65a, a small diameter portion 65c continuously extending from the large diameter portion 65b and having a diameter less than that of the large diameter portion 65b, and a distal end-side portion 65d continuously extending from the small diameter portion 65c. A stepped surface between the base end-side portion 65a and the large diameter portion 65b is formed as a pressable surface orthogonal to the moving direction of the piston 40.

One end (base end; an end of the base end-side portion 65a) of the valve stem 65 is in contact with the second holding member 35c provided in the spring chamber 35. The other end (distal end; an end of the distal end-side portion 65d) of the valve stem 65 is increased in diameter. When this increased-diameter distal end is located at a position overlapping with a jutting area of the supply and release bush 56, a communication between the output chamber 33 and the input chamber 31 is cut off. On the other hand, when the distal end of the valve stem 65 is located at a position protruding from the jutting area of the supply and release bush 56 (position protruding toward the right side in FIG. 3), the output chamber 33 and the input chamber 31 are communicated with each other. Thus, the source pressure SR inside the input chamber 31 is introduced into the output chamber 33, so that an internal pressure of the output chamber 33 is adjusted to the load compensated pressure VL in accordance with a movement of the piston 40.

The pilot pressure transmitting member 66 is externally fitted on the base end-side portion 65a of the valve stem 65. The pilot pressure transmitting member 66 has a flange 66a with a contact surface which allows the adjustment spring 34a and an end surface (pressable surface) of the large diameter portion 65b to be brought into contact therewith. A surface of the flange 66a on a side opposite to the contact surface is formed as a pressure surface to be pressed by the primary diaphragm 41a.

The pilot pressure transmitting member 66 is formed with a concave portion 66b for fixing an inner peripheral end of each of the primary diaphragm 41 a and the secondary diaphragm 41 b. When the first diaphragm member 41 is bent, an inner peripheral end of the first diaphragm member 41 is moved away from a bottom wall surface of the concave portion 66b of the pilot pressure transmitting member 66, in some cases. Even in such a situation, a close contact between the inner peripheral end and each of front and rear wall surfaces of the concave portion 66b is maintained. This prevents air in the pilot chamber 32 from leaking to the adjustment chamber 34.

The pilot pressure transmitting member 66 is adapted to be displaceable with respect to the valve stem 65. Specifically, a total force of a pressing force of the adjustment spring 34a adjustable by the adjusting member 48, and the pilot pressure, is applied to the pilot pressure transmitting member 66.

The force transmitting member 43 is fixed to the small diameter portion 65c of the valve stem 65. Thus, along with the axial movement of the piston 40, the force transmitting member 43 is also moved integrally together with the valve stem 65. The force transmitting member 43 has a fixed portion 43a fixed to an outer peripheral surface of the small diameter portion 65c of the valve stem 65, a pressure receiving portion 43b extended radially outwardly from a front end of the fixed portion 43a, and an extension portion 43c extended radially outwardly from a rear end of the fixed portion 43a at a position opposite to the pressure receiving portion 43b across the second diaphragm member 42. Each of the pressure receiving portion 43b and the extension portion 43c is formed in a flat disc shape, and the extension portion 43c is formed to have a radial width less than that of the pressure receiving portion 43b. The force transmitting member 43 has a radially outwardly opened concave portion defined by the pressure receiving portion 43b, the fixed portion 43a and the extension portion 43c.

The extension portion 43c of the force transmitting member 43 is located inside the output chamber 33, so that, when the second diaphragm member 42 is bent by receiving a pressure inside the output chamber 33 through the extension portion 43c, it is brought into close contact with the pressure receiving portion 43b while pressing a rear surface (a surface on the side of the extension portion 43c) of the pressure receiving portion 43b. In other words, the rear surface of the pressure receiving portion 43b functions as a pressure receiving surface 43d for receiving a pressing force caused by the bending of the second diaphragm member 42. The force transmitting member 43 is adapted to transmit, to the piston 40, a force according to the pressing force received from the second diaphragm member 42 through the pressure receiving surface 43d.

The second diaphragm member 42 is formed in an annular shape, and disposed such that an outer peripheral surface thereof is in contact with the inner peripheral surface of the through-hole of the block body 25a (second block portion 25e). The second diaphragm member 42 has an inner peripheral end fitted in the concave portion of the force transmitting member 43. The inner peripheral end of the second diaphragm member 42 is not bonded to the force transmitting member 43. Thus, when the second diaphragm member 42 is bent, the inner peripheral end is moved away from the fixed portion of the force transmitting member 43 in some cases. However, even in such a situation, a close contact between the inner peripheral end and each of the pressure receiving portion 43b and the extension portion 43c is maintained, which prevents air in the output chamber 33 from leaking to the adjustment chamber 34.

The second diaphragm member 42 is fixed to the block body 25a by the diaphragm fixing member 45 and the auxiliary fixing member 46. The diaphragm fixing member 45 is an annular-shaped member, and disposed on a radially outward side of the pressure receiving portion 43b of the force transmitting member 43. The auxiliary fixing member 46 is an annular-shaped member, and disposed on a radially outward side of the extension portion 43c of the force transmitting member 43. That is, the diaphragm fixing member 45 is located on a front side of the second diaphragm member 42, and the auxiliary fixing member 46 is located on a rear side of the second diaphragm member 42. Then, the second diaphragm member 42 is clamped by the diaphragm fixing member 45 and the auxiliary fixing member 46, and, in this state, the diaphragm fixing member 45, an outer periphery of the second diaphragm member 42 and the auxiliary fixing member 46 are clamped by the first block portion 25d and the second block portion 25e of the block body 25a. That is, the diaphragm fixing member 45 and the auxiliary fixing member 46 are fixed to the block body 25a.

The diaphragm fixing member 45 is a member for setting an area of the pressure receiving surface 43d of the force transmitting member 43, and formed separately from the block body 25a. Specifically, when a plurality of types of force transmitting members 43 each having a pressure receiving portion 43b different in radial width are used, a force to be applied from the second diaphragm member 42 to each of the pressure receiving portions 43b varies. Thus, a force to be transmitted to the piston 40 through the force transmitting member 43 can be changed by using the plurality of types of force transmitting members 43 different in the width. Therefore, one of the force transmitting members 43 may be selected so as to obtain a desired performance characteristic, and disposed within the first block portion 25d. Then, an outer diameter of the pressure receiving portion 43b and an inner diameter of the diaphragm fixing member 45 are determined to allow a gap between the pressure receiving portion 43b and the diaphragm fixing member 45 to become approximately constant.

A gap is defined between the extension portion 43c and the auxiliary fixing member 46. This gap is set to a value which is free of entering of the second diaphragm member 42 even if the second diaphragm member 42 is deformed.

The spring bearing 47 provided inside the adjustment chamber 34 has an outer peripheral surface of a cylindrical-shaped portion with an outer diameter corresponding to an inner diameter of the adjustment chamber 34, and a conical-shaped inclined surface 47a continuously extending from a rear end of the outer peripheral surface. The inclined surface 47a is formed in a shape having an outer diameter which gradually decreases in a direction away from the outer peripheral surface. The inclined surface 47a has an insertion hole formed in a central region thereof to allow the valve stem 65 to pass therethrough. The spring bearing 47 is disposed to sandwich the adjustment spring 34a between the pilot pressure transmitting member 66 and the spring bearing 47.

The adjustment chamber 34 has a screw hole formed to radially penetrate through the first block portion 25d of the block body 25a, and the adjusting member 48 is screwed with the screw hole. The adjusting member 48 has an inner end in contact with the inclined surface 47a of the spring bearing 47. A reaction force of the adjustment spring 34a to the adjusting member 48 is received by the block 25 (block body 25a).

As illustrated in FIG 2, the brake-pressure generating section 27b is a region of the compressed air circuit 27 having the relay valve 22. In this embodiment, the pair of relay valves 22 are provided, and therefore a pair of the brake-pressure generating sections are formed.

The relay valve 22 is connected with an air supply solenoid valve 70A and an air release solenoid valve 70R. A control signal output from a control circuit composed of a microcomputer circuit mounted on the control board 17 is input into each of the air supply solenoid valve 70A and the air release solenoid valve 70R. The control signal is generated in accordance with a signal corresponding to a normal brake command to be sent from the vehicle to the brake control device 10, a signal based on a detection value of a pilot pressure sensor 71 and a signal based on a detection value of a brake pressure sensor 72.

Upon receiving the normal brake command, the control circuit of the control board 17 is operable to set a brake pressure BC to be output from the relay valve 22, in accordance with the normal brake command, and transmit a control signal corresponding to the brake pressure BC, to each of the air supply solenoid valve 70A and the air release solenoid valve 70R. Then, respective valve positions of the air supply solenoid valve 70A and the air release solenoid valve 70R are adjusted in accordance with the control signal, thereby adjusting the load compensated pressure VL output from the variable load valve 21. The adjusted pressure is input as a pilot pressure into the relay valves 22. On the other hand, in accordance with the detection value of the pilot pressure sensor 71 and the detection value of the brake pressure sensor 72, the control board 17 is operable to adjust the valve positions of the air supply solenoid valve 70A and the air release solenoid valve 70R.

The pressure adjusted by the air supply solenoid valve 70A and the air release solenoid valve 70R is input as a pilot pressure into the relay valves 22. The relay valves 22 are operable to output a brake pressure BC in accordance with the pilot pressure. Specifically, the relay valve 22 comprises an input chamber 22a having an input port, an output chamber 22b having an output port, a control chamber 22c having a pilot port, a discharge chamber 22d having a discharge port, a hollow piston 22e, a diaphragm 22f, a spring 22g, a valve element 22h and a spring 22i.

The input chamber 22a is adapted to receive an input of the source pressure SR through the input port. The control chamber 22c is adapted to receive an input of the pilot pressure through the pilot port. The output chamber 22b is adapted to generate a brake pressure according to the pilot pressure and output the brake pressure through the output port. The discharge chamber 22d is adapted to discharge an excess pressure through the discharge port.

The diaphragm 22f supports the piston 22e in a reciprocatingly movable manner. Further, the diaphragm 22f is adapted to be bent according to a difference between an air pressure inside the control chamber 22c and an air pressure inside the output chamber 22b. Thus, the diaphragm 22f is operable to displace the piston 22e against a biasing force of the spring 22g. When the piston 22e is displaced upwardly, the valve element 22h is moved upwardly against a biasing force of the spring 22i. Consequently, the input chamber 22a and the output chamber 22b are placed in a communicated state. Subsequently, when the pressure difference disappears, the piston 22e is displaced downwardly, and the valve element 22h is moved by the spring 22i, so that the input chamber 22a and the output chamber 22b are placed in a non-communicated state. In contrast, when the piston 22e is displaced downwardly, the output chamber 22b and the discharge chamber 22d are placed in a communicated state through a hollow portion of the piston 22e. In this process, an output pressure also flows into a spring chamber 22j via an orifice, and acts to press the piston 22e downwardly. Then, when a difference between a pressure inside the control chamber 22c and an output pressure (a pressure inside the spring chamber 22j) disappears, the piston 22e is displaced upwardly, so that the output chamber 22b and the discharge chamber 22d are placed in a non-communicated state.

That is, the pressure inside the output chamber 22b is adjusted to a brake pressure according to the pilot pressure, by allowing compressed air of the input chamber 22a to flow into the output chamber 22b or allowing compressed air of the output chamber 22b to be discharged to the discharge chamber 22d.

In the brake pressure control valve 20, under the control of the control board 17, a load compensated pressure VL is set according to signals from the pressure sensors 53, 54. Further, when the control board 17 receives a normal brake command, a brake pressure is set in accordance with the normal brake command, and transmitted to each of the air supply solenoid valve 70A and the air release solenoid valve 70R.

In the variable load valve 21, the piston 40 is displaced by using the air pressures AS1, AS2 from the air springs as pilot pressures, to output a load compensated pressure VL. The load compensated pressure VL is input into the relay valves 22. In the relay valves 22, respective valve position of the air supply solenoid valve 70A and the air release solenoid valve 70R are adjusted in accordance with a control signal, thereby adjusting the load compensated pressure VL to a predetermined pressure. In each of the relay valves 22, the piston 22e is displaced in accordance with the pilot pressure to output a brake pressure BC from the output port.

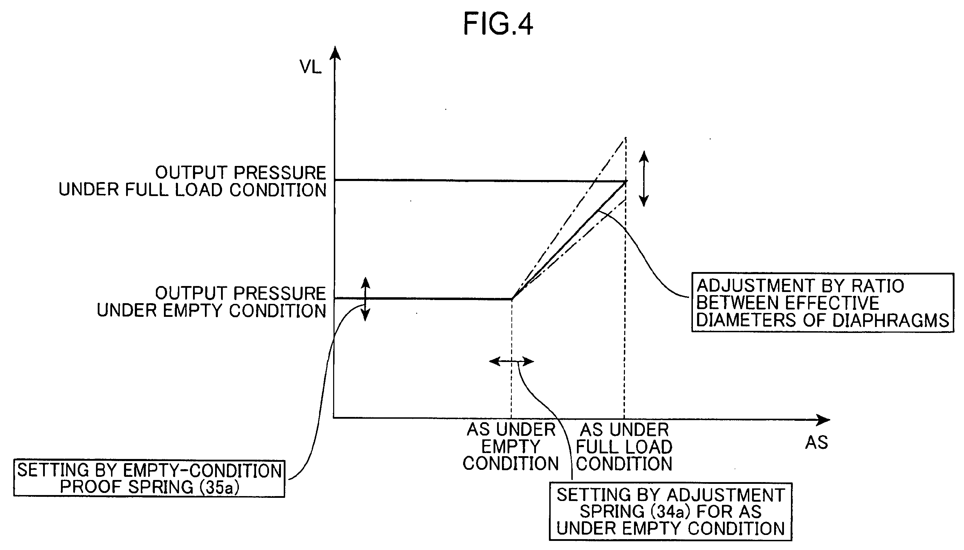

With reference to FIG. 4, a method of adjusting an output pressure (load compensated pressure VL) of the variable load valve 21 will be described below. In FIG. 4, the horizontal axis represents an air pressure AS to be introduced from the air spring into the pilot chamber 32, and the vertical axis represents an output pressure (load compensated pressure VL) of the variable load valve 21.

In the spring chamber 35, a spring force to be stored in the empty-condition proof spring 35a is changed by adjusting a screwing amount of the empty-condition proof pressure adjusting member 35d. A force causing the supply valve element 59 to open is changed in accordance with the spring force, so that an output pressure (load compensated pressure VL) under an empty condition is adjusted in accordance with the screwing amount of the empty-condition proof pressure adjusting member 35d. In principle, this adjustment is performed in a fabrication process of the vehicle. However, it is also performed after replacement of the variable load valve 21, and after completion of disassembly and maintenance.

In the adjustment chamber 34, a force of the spring bearing 47 to compress (press) the adjustment spring 34a is changed by changing a screwing amount of the adjusting member 48. In other words, an elastic force to be stored in the adjustment spring 34a is changed depending on the screwing amount of the adjusting member 48. The adjustment spring 34a acts on the pilot pressure transmitting member 66 to move the valve stem 65 in a direction causing the supply valve element 59 to close between the input chamber 31 and the output chamber 33. On the other hand, the pilot pressure transmitting member 66 receives a pressure AS inside the pilot chamber 32, from the first diaphragm member 41, to move the valve stem 65 in a direction causing the supply valve element 59 to open between the input chamber 31 and the output chamber 33 (in the right direction in FIG. 3). In other words, the pilot pressure transmitting member 66 receives a force corresponding to a difference between a pressing force caused by the air pressure AS and a pressing force caused by the adjustment spring 34a. Thus, a displacement amount of the pilot pressure transmitting member 66 (piston 40) is set to a value (reduced value) obtained by adjusting the pressure AS inside the pilot chamber 32, in accordance with an elastic force stored in the adjustment spring 34a. Therefore, a pressure AS for moving the piston 40 in a direction causing the supply valve element 59 to be opened (in the right direction in FIG. 3) (an air pressure indicated by "AS under empty condition" in FIG. 4) can be adjusted by adjusting the screwing amount of the adjusting member 48.

On the other hand, an output pressure (load compensated pressure VL) under a full load condition is determined by a ratio of an area of the pressure receiving surface 43d of the force transmitting member 43 to an area of the pressure surface (surface pressed by the primary diaphragm 41a) of the flange 66a of the pilot pressure transmitting member 66. In other words, a force for pressing the piston 40 in a direction causing the supply valve element 59 to be opened (in the right direction in FIG. 3) is determined by a difference between a force caused by the pressure AS inside the pilot chamber 32 and a force received from the spring bearing 47. A force for pressing the piston 40 backwardly (a force caused by a pressure inside the output chamber 33 and received by the pressure receiving portion 43b through the second diaphragm member 42) is changed along with a change in area of the pressure receiving surface 43d. Therefore, the output pressure (load compensated pressure VL) under the full load condition can be set in accordance with the ratio of the area of the pressure receiving surface 43d of the force transmitting member 43 to the area of the pressure surface of the flange 66a of the pilot pressure transmitting member 66. In this way, the output pressure (load compensated pressure VL) under the empty condition and the output pressure (load compensated pressure VL) under the full load condition can be adjusted independently.

In the case where a characteristic of the output pressure (load compensated pressure VL) of the variable load valve 21 is changed, the force transmitting member 43 and the diaphragm fixing member 45 may be replaced. More specifically, the second cover portion 25c is detached from the block body 25a, and the second block portion 25e is detached from the first block portion 25d. Then, the supply and release bush 56 and the second bush 57 are detached from the valve stem 65. In this way, the force transmitting member 43, the auxiliary fixing member 46, the second diaphragm member 42 and the diaphragm fixing member 45 can be detached. Then, a force transmitting member 43 having a pressure receiving portion 43b different in radial width, and a diaphragm fixing member 45 having a size corresponding to that of the pressure receiving portion 43b, are assembled to the valve stem 65. During assembling, the components may be assembled in the reverse order to that during the detachment. This makes it possible to obtain a variable load valve 21 having a desired output pressure (load compensated pressure VL) characteristic.

As described above, in the above embodiment, the inner periphery of the second diaphragm member 42 is fitted in the concave portion of the force transmitting member 43 defined by the pressure receiving portion 43b, the fixed portion 43a and the extension portion 43c. In this state, when the second diaphragm member 42 receives a pressure inside the output chamber 33, it is bent in accordance with the received pressure. Along with bending of the second diaphragm member 42, the second diaphragm member 42 presses the pressure receiving surface 43d of the force transmitting member 43. An area of the pressure receiving surface 43d is set in relationship to the diaphragm fixing member 45. The diaphragm fixing member 45 is formed separately from the block 25, so that the diaphragm fixing member 45 can be changed. Thus, the area of the pressure receiving surface 43d of the force transmitting member 43 can be selected by appropriately selecting a size of the diaphragm fixing member 45. A change in the area of the pressure receiving surface 43d causes a change in force to be transmitted from the second diaphragm member 42 to the piston 40 through the force transmitting member 43. Thus, a level of a load compensated pressure to be generated in accordance with the movement of the piston 40 can be changed by using a plurality of types of force transmitting members 43 each having a pressure receiving surface 43d different in size. Therefore, even if a performance specification is changed, it is possible to easily cope with redesign due to the change in performance specification, simply by appropriately selecting the diaphragm fixing member 45 and the force transmitting member 43. That is, the load compensated pressure characteristic can be easily changed without relying on an electronic control system.

In the above embodiment, the force transmitting member 43 is configured such that the width of the extension portion 43c is less than that of the pressure receiving portion 43b to be applied with a pressure of the output chamber 33. Thus, even in the case where the second diaphragm member 42 is made, for example, of a synthetic rubber, the second diaphragm member 42 can be easily attached to the concave portion defined by the pressure receiving portion 43b, the fixed portion 43a and the extension portion 43c, from the side of the extension portion 43c. Therefore, it becomes possible to enhance assemblability of the force transmitting member 43 while bringing out a desired load compensated pressure characteristic, based on an area of the pressure receiving portion 43b.

In the above embodiment, the outer diameter of the pressure receiving portion 43b and the inner diameter of the diaphragm fixing member 45 are determined to allow the gap between the pressure receiving portion 43b and the diaphragm fixing member 45 to become approximately constant. This makes it possible to prevent the second diaphragm member 42 from being deformed, causing the second diaphragm member 42 to enter the gap between the pressure receiving portion 43b of the force transmitting member 43 and the diaphragm fixing member 45, along with the movement of the piston 40. Thus, it becomes possible to prevent dropout of the second diaphragm member 42.

In the above embodiment, when the first diaphragm member 41 is bent in accordance with a pressure inside the pilot chamber 32, the pilot pressure transmitting member 66 receives a pressing force of the first diaphragm member 41. On the other hand, when a pressing force to the spring bearing 47 is adjusted by the adjusting member 48, an elastic force to be stored in the adjustment spring 34a is changed, so that a force to be added from the adjustment spring 34a to the pilot pressure transmitting member 66 is changed. Thus, a force obtained by adjusting or correcting a pressing force according to the pressure inside the pilot chamber 32, based on the elastic force of the adjustment spring 34a, can be transmitted to the valve stem 65. In addition, in the above embodiment, the adjustment or correction based on the adjustment spring 34a, and the adjustment of the spring force of the empty-condition proof spring 35a, can be performed separately and independently, so that it becomes possible to prevent an operation of adjusting the load compensated pressure under the empty condition, from becoming complicated.

It is to be understood that the present invention is not limited to the above embodiment but various changes and modifications may be made therein without departing from the scope of the present invention. For example, although the above embodiment has been described based on a configuration in which the variable load valve 21 and the relay valve 22 are integrally provided in the block 25 of the brake pressure control valve 20, the present invention is not limited thereto. For example, the relay valve 22 may be formed as a separate component.

Further, although the above embodiment has been described based on a configuration in which the variable load valve 21 is disposed in a posture where the empty-condition proof spring 35a is located on the front side, the present invention is not limited thereto.

The above embodiment will be outlined below.
(1) In the above embodiment, the inner periphery of the second diaphragm member is fitted in the concave portion of the force transmitting member defined by the pressure receiving portion, the fixed portion and the extension portion. In this state, when the second diaphragm member receives a pressure inside the output chamber, it is bent in accordance with the received pressure. Along with bending of the second diaphragm member, the second diaphragm member presses the pressure receiving surface of the force transmitting member. An area of the pressure receiving surface is set in relationship to the diaphragm fixing member. The diaphragm fixing member is formed separately from the valve body, so that the diaphragm fixing member can be changed. Thus, the area of the pressure receiving surface of the force transmitting member can be selected by appropriately selecting a size of the diaphragm fixing member. A change in the area of the pressure receiving surface causes a change in force to be transmitted from the second diaphragm member to the piston through the force transmitting member. Thus, a level of a load compensated pressure to be generated in accordance with the movement of the piston can be changed by using a plurality of types of force transmitting members each having a pressure receiving surface different in size. Therefore, even if a performance specification is changed, it is possible to easily cope with redesign due to the change in performance specification, simply by appropriately selecting the diaphragm fixing member and the force transmitting member. That is, the load compensated pressure characteristic can be easily changed without relying on an electronic control system.
(2) Preferably, the extension portion is formed such that a radial width thereof is less than a radial width of the pressure receiving portion.
   In this embodiment, the width of the extension portion is less than that of the pressure receiving portion to be applied with a pressure of the output chamber. Thus, even in the case where the second diaphragm member is made, for example, of a synthetic rubber, the second diaphragm member can be easily attached to the concave portion defined by the pressure receiving portion, the fixed portion and the extension portion, from the side of the extension portion. Therefore, it becomes possible to enhance assemblability of the force transmitting member while bringing out a desired load compensated pressure characteristic, based on an area of the pressure receiving portion.
(3) Preferably, an outer diameter of the pressure receiving portion and an inner diameter of the diaphragm fixing member are determined to allow a gap between the pressure receiving portion and the diaphragm fixing member to become approximately constant.
   In this embodiment, it becomes possible to prevent the second diaphragm member from being deformed, causing the second diaphragm member to enter the gap between the pressure receiving portion of the force transmitting member and the diaphragm fixing member, along with the movement of the piston. This makes it possible to prevent dropout of the second diaphragm member.
(4) The piston may have a valve stem, and a pilot pressure transmitting member attached to the valve stem and adapted to transmit, to the valve stem, a force according to a pressing force caused by the bending of the first diaphragm member and received from the first diaphragm member. In this case, it is preferable that the variable load valve further comprises: an adjustment spring; a spring bearing having an inclined surface, wherein the spring bearing is disposed to sandwich the adjustment spring between the pilot pressure transmitting member and the spring bearing; and an adjusting member adapted to press the inclined surface in such a manner as to allow a pressing force for the adjustment spring to be changed.
   In this embodiment, the pilot pressure transmitting member receives a pressing force of the first diaphragm member caused by bending of the first diaphragm member in accordance with a pressure inside the pilot chamber,. On the other hand, when a pressing force to the spring bearing is adjusted by the adjusting member, an elastic force to be stored in the adjustment spring is changed, so that a force to be added from the adjustment spring to the pilot pressure transmitting member is changed. Thus, a force obtained by adjusting or correcting a pressing force according to the pressure inside the pilot chamber, based on the elastic force of the adjustment spring, can be transmitted to the valve stem.
(5) The brake control device in the above embodiment comprises: the above variable load valve; and a relay valve capable of generating a brake pressure, based on a control pressure generated in accordance with the load compensated pressure or a pressure output from the variable load valve.

As mentioned above, the variable load valve according to the present invention can easily cope with redesign due to a change in performance specification or the like by appropriately selecting the diaphragm fixing member and the force transmitting member.

### EXPLANATION OF CODES

25: block
25f: internal space
31: input chamber
32: pilot chamber
32a: pilot portion
32b: pilot portion
33: output chamber
34: adjustment chamber
35: spring chamber
35a: empty-condition proof spring
35d: empty-condition proof pressure adjusting member
40: piston
41: first diaphragm member
41 a: primary diaphragm
41b: secondary diaphragm
42: second diaphragm member
43: force transmitting member
43a: fixed portion
43b: pressure receiving portion
43c: extension portion
43d: pressure receiving surface
44: diaphragm-member fixing portion
44a: main fixing portion
44b: auxiliary fixing portion
44c: communication hole
45: diaphragm fixing member
46: auxiliary fixing member
47a: inclined surface
48: adjusting member
56: supply and release bush
59: supply valve element
65: valve stem
65a: base end-side portion
65b: large diameter portion
65c: small diameter portion
65d: distal end-side portion
66: pilot pressure transmitting member
66a: flange

## Claims

1. A variable load valve (21) comprising:
a valve body having a space defined therein;
an annular-shaped first diaphragm member (41) disposed within said space in a state in which an outer peripheral portion thereof is fixed, to define, in said space, a pilot chamber for receiving an air pressure according to a vehicle weight, the first diaphragm member being bendable by a pressure inside the pilot chamber;
an annular-shaped second diaphragm member (42) disposed within said space in a state in which an outer peripheral portion thereof is fixed, to define, in said space, an output chamber for outputting a load compensated pressure, the second diaphragm member being bendable by a pressure inside the output chamber;
a piston (40) adapted to be axially displaced in accordance with a bending of the first diaphragm member and a bending of the second diaphragm member, thereby generating a load compensated pressure; **characterized in that**
a force transmitting member (43) having a fixed portion fixed to an outer peripheral surface of the piston, a pressure receiving portion (43b) having a pressure receiving surface extended radially from the fixed portion for receiving a pressing force caused by the bending of the second diaphragm member, and an extension portion extended radially from the fixed portion at a position opposite to the pressure receiving portion across the second diaphragm member, the force transmitting member being adapted to transmit, to the piston, a force according to the pressing force received from the second diaphragm member through the pressure receiving surface; and
a diaphragm fixing member (45) formed separately from the valve body, and adapted to fix the outer peripheral portion of the second diaphragm member to the valve body and set an area of the pressure receiving surface of the force transmitting member.

2. The variable load valve as defined in claim 1, wherein the extension portion is formed such that a radial width thereof is less than a radial width of the pressure receiving portion (43b).

3. The variable load valve as defined in claim 1, wherein an outer diameter of the pressure receiving portion (43b) and an inner diameter of the diaphragm fixing member (45) are determined to allow a gap between the pressure receiving portion and the diaphragm fixing member to become approximately constant.

4. The variable load valve as defined in any one of claims 1 to 3, wherein the piston has a valve stem (65), and a pilot pressure transmitting member (66) attached to the valve stem and adapted to transmit, to the valve stem, a force according to a pressing force caused by the bending of the first diaphragm member and received from the first diaphragm member, and
wherein the variable load valve further comprises:
an adjustment spring (34);
a spring bearing having an inclined surface, the spring bearing being disposed to sandwich the adjustment spring between the pilot pressure transmitting member and the spring bearing; and
an adjusting member (48) adapted to press the inclined surface in such a manner as to allow a pressing force for the adjustment spring to be changed.

5. A brake control device comprising:
the variable load valve as defined in any one of claims 1 to 4; and
a relay valve (22) capable of generating a brake pressure, based on a control pressure generated in accordance with the load compensated pressure or a pressure output from the variable load valve.

## Patentansprüche

1. Ventil (21) mit variabler Last, das umfasst:
einen Ventilkörper mit einem darin definierten Raum;
ein ringförmiges erstes Membranelement (41), das in einem Zustand, in dem sein Außenumfangsabschnitt fixiert ist, innerhalb des Raums angeordnet ist, um in dem Raum eine Vorsteuerkammer zum Aufnehmen eines Luftdrucks entsprechend einem Fahrzeuggewicht zu definieren, wobei das erste Membranelement durch einen Druck im Inneren der Vorsteuerkammer biegbar ist;
ein ringförmiges zweites Membranelement (42), das in einem Zustand, in dem sein Außenumfangsabschnitt fixiert ist, innerhalb des Raums angeordnet ist, um in dem Raum eine Ausgangskammer zum Ausgeben eines lastkompensierten Drucks zu definieren, wobei das zweite Membranelement durch einen Druck im Inneren der Ausgangskammer biegbar ist;
einen Kolben (40), der geeignet ist, um gemäß einer Biegung des ersten Membranelements und einer Biegung des zweiten Membranelements axial verschoben zu werden, wodurch ein lastkompensierter Druck erzeugt wird;
**gekennzeichnet durch**
ein Kraftübertragungselement (43) mit einem fixierten Abschnitt, der an einer Außenumfangsfläche des Kolbens fixiert ist, einem Druckaufnahmeabschnitt (43b) mit einer Druckaufnahmefläche, die sich von dem fixierten Abschnitt radial erstreckt, zum Aufnehmen einer Druckkraft, die **durch** die Biegung des zweiten Membranelements bewirkt wird, und einem Ausdehnungsabschnitt, der sich von dem fixierten Abschnitt an einer Position entgegengesetzt zu dem Druckaufnahmeabschnitt über das zweite Membranelement radial erstreckt, wobei das Kraftübertragungselement geeignet ist, entsprechend der Druckkraft, die durch die Druckaufnahmefläche von dem zweiten Membranelement aufgenommen wird, eine Kraft auf den Kolben zu übertragen; und
ein Membranfixierelement (45), das getrennt von dem Ventilkörper ausgebildet ist und geeignet ist, um den Außenumfangsabschnitt des zweiten Membranelements an dem Ventilkörper zu fixieren und eine Fläche der druckaufnehmenden Fläche des Kraftübertragungselements festzulegen.

2. Ventil mit variabler Last nach Anspruch 1, wobei der Ausdehnungsabschnitt derart ausgebildet ist, dass seine radiale Breite kleiner als eine radiale Breite des Druckaufnahmeabschnitts (43b) ist.

3. Ventil mit variabler Last nach Anspruch 1, wobei ein Außendurchmesser des Druckaufnahmeabschnitts (43b) und ein Innendurchmesser des Membranfixierelements (45) bestimmt sind, um zuzulassen, dass eine Lücke zwischen dem Druckaufnahmeabschnitt und dem Membranfixierelement ungefähr konstant wird.

4. Ventil mit variabler Last nach einem der Ansprüche 1 bis 3, wobei der Kolben einen Ventilschaft (65) und ein Vorsteuerdruckübertragungselement (66) hat, das an dem Ventilschaft befestigt ist und geeignet ist, entsprechend einer Druckkraft, die durch das Biegen des ersten Membranelements bewirkt wird und die von dem ersten Membranelement aufgenommen wird, eine Kraft auf den Ventilschaft zu übertragen, und
wobei das Ventil mit variabler Last ferner umfasst:
eine Einstellfeder (34);
ein Federlager mit einer geneigten Fläche, wobei das Federlager derart angeordnet ist, dass es die Einstellfeder zwischen dem Vorsteuerdruckübertragungselement und dem Federlager eingeschoben hat; und
ein Einstellelement (48), das geeignet ist, die geneigte Fläche in einer Weise zu drücken, um zuzulassen, dass eine Druckkraft für die Einstellfeder geändert wird.

5. Bremssteuervorrichtung, die umfasst:
das Ventil mit variabler Last nach einem der Ansprüche 1 bis 4; und
ein Relaisventil (22), das fähig ist, basierend auf einem Steuerdruck, der entsprechend dem lastkompensierten Druck oder einem Druck, der von dem Ventil mit variabler Last ausgegeben wird, einen Bremsdruck zu erzeugen.

## Revendications

1. Soupape à charge variable (21) comprenant :
un corps de soupape dans lequel est défini un espace ;
un premier élément de diaphragme (41) de forme annulaire agencé à l'intérieur dudit espace dans un état où une portion périphérique externe dudit élément est fixée, afin de définir dans ledit espace une chambre pilote pour recevoir une pression d'air conformément à un poids de véhicule, le premier élément de diaphragme pouvant être fléchi par une pression à l'intérieur de la chambre pilote ;
un deuxième élément de diaphragme (42) de forme annulaire agencé à l'intérieur dudit espace dans un état où une portion périphérique externe dudit élément est fixée, afin de définir dans ledit espace une chambre de sortie pour sortir une pression compensée en fonction de la charge, le deuxième élément de diaphragme pouvant être fléchi par une pression à l'intérieur de la chambre de sortie ;
un piston (40) adapté pour être déplacé axialement en fonction d'une flexion du premier élément de diaphragme et d'une flexion du deuxième élément de diaphragme, générant ainsi une pression compensée en fonction de la charge ;
**caractérisée par**
un élément de transmission de force (43) comportant une portion fixée à une surface périphérique externe du piston, une portion de réception de pression (43b) comportant une surface de réception de pression qui s'étend radialement depuis la portion fixée pour recevoir une force de poussée provoquée par la flexion du deuxième élément de diaphragme, et une portion d'extension qui s'étend radialement depuis la portion fixée à une position opposée à la portion de réception de pression en travers du deuxième élément de diaphragme, l'élément de transmission de force étant adapté pour transmettre au piston une force conformément à la force de poussée reçue du deuxième élément de diaphragme via la surface de réception de pression ; et
un élément de fixation de diaphragme (45) formé séparément du corps de soupape, et adapté pour fixer la portion périphérique externe du deuxième élément de diaphragme au corps de soupape et pour régler une superficie de la surface de réception de pression de l'élément de transmission de force.

2. Soupape à charge variable selon la revendication 1, dans laquelle la portion d'extension est formée de telle sorte qu'une largeur radiale de celle-ci est inférieure à une largeur radiale de la portion de réception de pression (43b).

3. Soupape à charge variable selon la revendication 1, dans laquelle un diamètre externe de la portion de réception de pression (43b) et un diamètre interne de l'élément de fixation de diaphragme (45) sont déterminés de telle sorte qu'un intervalle entre la portion de réception de pression et l'élément de fixation de diaphragme devient approximativement constant.

4. Soupape à charge variable selon l'une quelconque des revendications 1 à 3,
dans laquelle le piston comporte une tige de soupape (65) et un élément de transmission de pression pilote (66) attaché à la tige de soupape et adapté pour transmettre à la tige de soupape une force conformément à une force de poussée produite par la flexion du premier élément de diaphragme et reçue du premier élément de diaphragme, et
dans laquelle la soupape à charge variable comprend en outre :
un ressort d'ajustement (34) ;
un palier de ressort comportant une surface inclinée, le palier de ressort étant agencé pour intercaler le ressort d'ajustement entre l'élément de transmission de pression pilote et le palier de ressort ; et
un élément d'ajustement (48) adapté pour pousser la surface inclinée de manière à pouvoir changer une force de poussée pour le ressort d'ajustement.

5. Dispositif de commande de frein comprenant :
la soupape à charge variable selon l'une quelconque des revendications 1 à 4 ; et
une soupape relais (22) capable de générer une pression de frein, sur base d'une pression de commande générée conformément à la pression compensée en fonction de la charge ou à une pression sortie par la soupape à charge variable.
